# EUROPEAN PATENT APPLICATION

(11) **EP 2 082 884 A2**
(43) Date of publication of application: **29.07.2009**
(21) Application number: 09000892.1
(22) Date of filing: 22.01.2009
(51) Int. Cl.: B41J 3/01, B41J 2/155

(54) **Barcode printing device and barcode printing method**

(30) Priority: 25.01.2008 JP 2008015178
(71) Applicant: Canon Finetech Inc., Misato-shi Saitama 341-8527 (JP)
(72) Inventor: Kunimatsu, Miho, Misato-shi Saitama 341-8527 (JP)
(74) Representative: Strehl Schübel-Hopf & Partner

(57) **Abstract**

A barcode printing device, which forms one image using plural same-color heads arranged in parallel, generates a barcode in which the effect of variations in landing position accuracy, caused by variations in the conveyance, is minimized. The barcode printing device comprises plural line heads 22K1-22K6, which eject same-color ink and are arranged in parallel with each other, and the plural line heads work together to print plural lines configuring each bar of a barcode while conveying recording paper relatively to the plural line heads. In this case, when each of plural bars configuring a barcode is formed by three or more successive lines, the two outermost lines of each bar are printed by one same line head (22K1) of the plural line heads when the barcode is printed. The inner lines between the outermost two lines of each bar are printed by any line heads.

## Description

### DETAILED DESCRIPTION

### Field of the Invention

The present invention relates to a barcode printing device and a barcode printing method in which plural line heads, which eject the same-color ink and are arranged in parallel with each other, work together to print plural lines for configuring each bar of a barcode while conveying recording paper below the plural line heads.

### Related Art

The inkjet recording method has an advantage that the inkjet recording heads, which function as recording means, can easily be made compact, high-resolution images can be recorded fast and, at the same time, the running cost is low because images can be recorded even on the so-called plain paper on which no special processing is done.

The inkjet recording method also has another advantage that it uses the non-impact recording method that generates less noise and forms images on a printing medium in a non-contact manner.

To increase the print speed, another technology is also known in which plural line heads, which eject the same-color ink and are arranged in parallel, work together to print plural lines (rasters) on paper that is conveyed perpendicularly to the lines.

In addition, an inkjet print system for barcode printing is proposed in which a correction function is provided for changing the number of dots in width of a bar or the number of dots in width of a space for correcting the bar width that may be varied by ink blurs on paper (see Patent Document 1).

### [Prior art document]

[Patent Document 1] Japanese Patent Laid-Open Publication No. 2004-291401

However, when the lines are printed sequentially using the plural heads arranged in parallel as in the conventional device (for example, six line heads from the first to the sixth), the problem is that the paper that should be conveyed below the heads at a constant speed is sometimes not conveyed at a constant speed because of paper slippage or irregular-speed conveyance. Variations in accuracy of the paper conveyance lead to variations in accuracy of the landing positions of ink droplets emitted from the recording heads. The variations in conveyance accuracy affect the print output quality of a barcode where the print accuracy is required, especially when the direction of each of the bars forming a one-dimensional barcode is perpendicular to the paper conveyance direction (the longitudinal direction of each bar is parallel to the direction perpendicular to the paper conveyance direction).

Recently, a print system is sometimes configured by receiving only provided print units (print unit modules), which are modular units having the print function, and installing the provided print units on a conveyance device already installed in the installation site. In such a case, because the print unit provider cannot take a problem corrective action that directly changes the conveyance device at the installation site, the operator of the print unit installation site must take a corrective action.

An inkjet printer, such as the one described in Patent Document 1 given above, has the correction function that corrects a bar width, which may vary depending upon the paper and ink blurs, by correcting the number of dots in bar width or the number of dots in space width on a pixel-basis only. Therefore, the problem with this correction function is that the width cannot be corrected when the droplet landing position deviates more or less than one pixel from the correct landing position.

In view of the foregoing, it is an object of the present invention to provide a printer, which forms one image using plural same-color heads arranged in parallel, for generating a barcode in which the effect of variations in droplet landing accuracy, caused by variations in the conveyance, is minimized.

### SUMMARY OF THE INVENTION

A barcode printing device of the present invention comprises a plurality of line heads ejecting same-color ink and arranged in parallel with each other and, in this barcode printing device, the plurality of line heads work together to print a plurality of lines configuring each bar of a barcode while conveying recording paper relatively to the plurality of line heads. When a barcode conf igured by bars, each bar formed by three or more successive lines, is printed, two outermost lines of each bar are printed by one same line head of the plurality of line heads.

Normally, the distance between the outermost lines of the three or more successive lines configuring one bar is much shorter than the interval between the plural line heads arranged in parallel with each other. Therefore, printing the two outermost lines of each bar using the one same line head of the plural line heads forms the image of both outermost lines in an extremely short time interval, thus preventing their print positions from being affected by variations in the paper conveyance speed.

Out of the plural line heads, using the line head residing in the uppermost-stream in the paper conveyance direction as the one same line head allows the edges of a bar to dry sooner and minimizes the effect of blurring.

Printing at least one line of the inner lines between the outermost lines of each bar using the line heads other than the one same line head described above achieves the raster division operation effect.

More specifically, the barcode printing device comprises the plurality of line heads; paper conveyance means that conveys recording paper; ejection control means for controlling an ejection of ink from each line head; and raster division means that allocates one of the plurality of line heads to each of plural lines. This raster division means allocates the same line head to the outermost lines of each bar of the barcode.

Another barcode printing device of the present invention comprises a plurality of line heads ejecting same-color ink and arranged in parallel with each other, and the plurality of line heads work together to print a plurality of lines configuring each bar of a barcode while conveying recording paper relatively to the plurality of line heads. When a barcode configured by bars, each bar formed by three or more successive lines including first and second outermost lines, is printed, the first outermost line of each bar is printed by one same line head of the plurality of line heads and the second outermost line is printed by another same line head of the plurality of line heads.

More specifically, the first outermost line in the upstream side in the paper conveyance direction is printed by a first line head in the uppermost-stream side in the paper conveyance direction, and the outermost line in the downstream side is printed by a second line head that resides immediately downstream of the first line head. In this case, though the effect is slightly less significant than when the first and second outermost lines are printed by the same line head, the print distance between both outermost lines is less affected by a deviation in the conveyance speed than in the conventional method.

According to the present invention, a barcode printing device comprises a plurality of line heads ejecting same-color ink and arranged in parallel with each other and, in this barcode printing device, the plurality of line heads work together to print a plurality of lines configuring each bar of a barcode while conveying recording paper relatively to the plurality of line heads. In printing a barcode where high conveyance accuracy is required, the barcode printing device prints the two outermost lines of each bar using the one same line head, which is one of plural line heads, preventing variations in the paper conveyance speed from being reflected on the printing of the barcode and, as a result, allowing a high-quality barcode to be printed fast.

### BRIEF DESCRIPTION OF THE DRAWINGS

FIG. 1 is a front view schematically showing the general configuration of a printer that is an example of a barcode printing device using an inkjet recording method in an embodiment of the present invention.
FIG. 2 is a block diagram showing the electrical system of the printer in FIG. 1.
FIG. 3 is a diagram showing the image formation method of the inkjet printer in FIG. 1.
FIG. 4 is a diagram showing the image formation method of a conventional inkjet printer.
FIGs. 5A and 5B are diagrams showing bars printed when there is a conveyance deviation and when there is no conveyance deviation.
FIG. 6 is a diagram schematically showing the printing states of the heads in the embodiment of the present invention.
FIG. 7 is a diagram showing the printing of bars in the embodiment of the present invention.
FIG. 8 is a flowchart showing the processing of the print operation in the embodiment of the present invention.
FIG. 9 is a diagram schematically showing the printing states of the heads in a second embodiment of the present invention.
FIG. 10 is a diagram showing the printing of the bar of a barcode in the second embodiment of the present invention.
FIG. 11 is a diagram showing how the plural heads are allocated to the rasters of a raster group in a conventional method.
FIG. 12 is a diagram showing how the plural heads are allocated to the rasters of a raster group in the embodiment of the present invention.

### DETAILED DESCRIPTION OF PREFERRED EMBODIMENTS

Preferred embodiments of the present invention will be described in detail below with reference to the drawings. The following describes an example of a device in which plural line heads, which eject the same-color ink and are arranged in parallel with each other, work together to print lines (rasters) on paper conveyed in the direction substantially perpendicular to the longitudinal direction of the nozzle arrays of the line heads.

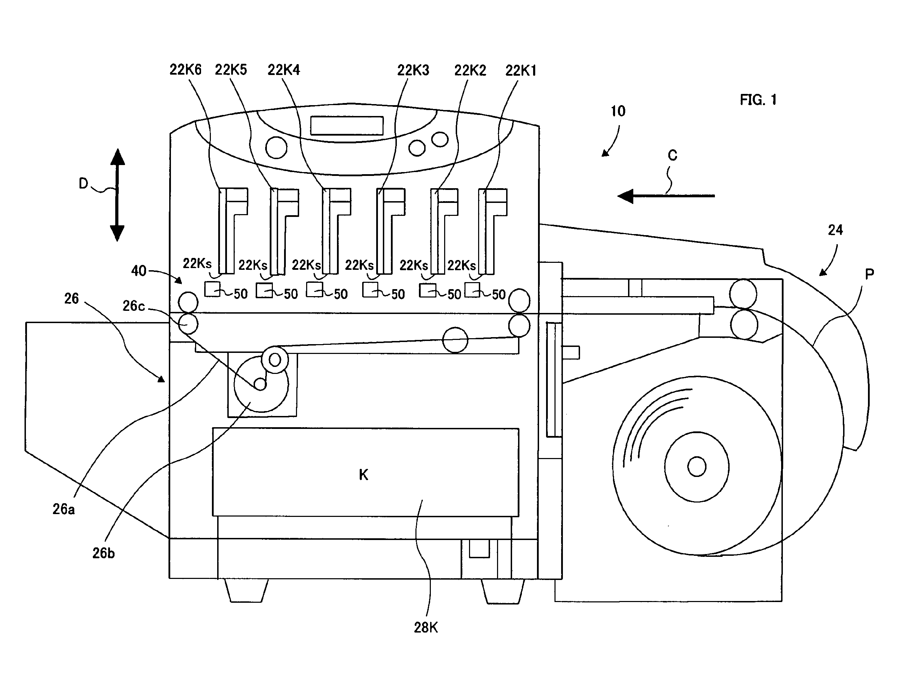

FIG. 1 is a front view schematically showing the general configuration of a printer 10 that is an example of a barcode printing device using an inkjet recording method in this embodiment. It is assumed that the inkjet recording method uses the inkjet ejection method using thermal energy. Note that other ink ejection methods may also be used.

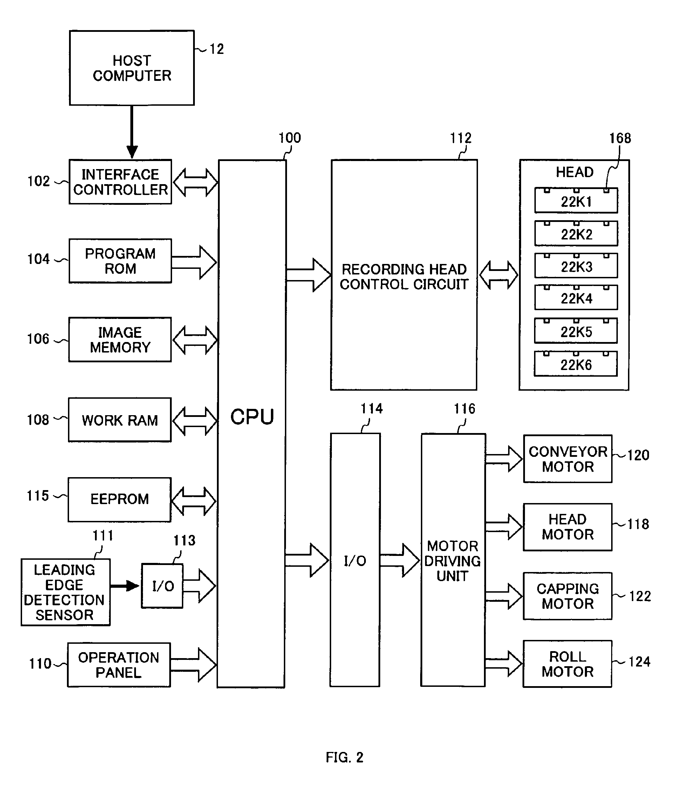

The printer 10 is connected to a host computer (personal computer) 12 (see FIG. 2) from which image information and its print instruction are received. This printer 10 includes six recording heads 22K1, 22K2, 22K3, 22K4, 22K5, and 22K6 as the plural line heads arranged in parallel. Each recording head is the so-called line head that has a nozzle array, composed of multiple nozzles, arranged along the width direction of the recording medium P (rolled paper in this case). Each line head extends to the direction vertical to the paper surface in FIG. 1 (that is, the direction perpendicular to the arrow C direction), and plural line heads are arranged in parallel in the conveyance direction of the recording medium P (e.g. arrow C direction). Black ink is ejected from all six recording heads. The nozzle array length of each line head is slightly longer than the maximum width (or length perpendicular to the paper conveyance direction in FIG. 1) of a recording medium that can be printed by the printer 10. The recording heads 22K1, 22K2, 22K3, 22K4, 22K5, and 22K6 are fixed and unmovable (in unmovable state) while an image is being formed.

A recovery unit 40 is included in the printer 10 to allow ink to be ejected stably from the six recording heads 22K1, 22K2, 22K3, 22K4, 22K5, and 22K6. This recovery unit 40 recovers the ink ejection state of each recording head to the initial, good ink ejection state. The recovery unit 40 has capping mechanisms 50 that remove ink from an ink ejection port forming face (face surface) 22Ks of each of the six recording heads during the recovery operation. The capping mechanisms 50 are provided independently, one for each recording head. The capping mechanism 50 comprises a wiper blade, a blade holding member, and a cap that are known.

Rolled paper P is supplied from a rolled paper supply unit 24 and is conveyed in the arrow C direction by a conveyance mechanism 26 included in the printer 10. The conveyance mechanism 26 comprises a conveyor belt 26a that conveys the rolled paper P mounted thereon, a conveyor motor 26b that rotates the conveyor belt 26a, and rollers 26c that maintain the tension of the conveyor belt 26a.

An image is formed on the rolled paper P as follows. Immediately after the recording start position of the conveyed rolled paper P reaches the position below the recording head 22K1, black ink is ejected selectively from the recording head 22K1 based on the recording data (or image information). Similarly, black ink is ejected from the recording heads, in order of the recording heads 22K2, 22K3, 22K4, 22K5, and 22K6, to form an image on the rolled paper P. In addition to the parts and the members described above, the printer 10 comprises a main tank 28K, in which ink to be supplied to the recording heads 22K1, 22K2, 22K3, 22K4, 22K5, and 22K6 is stored, and several types of pumps (not shown) that supply ink to the recording heads 22K1, 22K2, 22K3, 22K4, 22K5, and 22K6 or perform the recovery operation.

Next, the following describes the electrical system of the printer 10 with reference to FIG. 2.

Recording data and commands sent from the host PC 12 are received by a CPU 100 via an interface controller 102. The CPU 100 is a processor configuring a controller that generally controls the operations of the printer 10 such as the reception of recording data, the recording operation, and the handling of the rolled paper P. The CPU 100 analyzes a received command and, after that, expands the image data of the color components of recording data in an image memory 106 in the bit-mapped format for drawing. Before recording the expanded image, the CPU 100 drives a capping motor 122 and a head up/down motor (head motor) 118 via an input/output port (I/O) 114 and a motor driving unit 116 and moves the recording heads 22K1, 22K2, 22K3, 22K4, 22K5, and 22K6 away from the capping mechanisms 50 to their recording positions (image forming positions).

Next, via the input/output port (I/O) 114 and the motor driving unit 116, the CPU 100 drives a roll motor 124 that supplies the rolled paper P and a conveyor motor 120 that conveys the rolled paper P at a low speed to convey the rolled paper P to the recording position. The leading edge position of the rolled paper P is detected by a leading edge detection sensor 111 to determine the start time (or recording time) at which ink is ejected onto the rolled paper P that is conveyed at a constant speed. The detection output is sent to the CPU 100 via an input/output port 113.

After that, the CPU 100 sequentially reads the recording data of the corresponding color from the image memory 106 in synchronization with the conveyance of the rolled paper P and transfers the data, which has been read, to the recording heads 22K1, 22K2, 22K3, 22K4, 22K5, and 22K6 via a recording head control circuit 112. The recording heads 22K1, 22K2, 22K3, 22K4, 22K5, and 22K6 include plural temperature sensors 125 that detect the temperature for use by the recording head control circuit 112 to control the ejection.

The operation of the CPU 100 is executed based on the processing program stored in a program ROM 104. The program ROM 104 stores the processing program corresponding to the control flow as well as tables. The CPU 100 uses a work RAM 108 as the work memory. When the cleaning operation or the recovery operation is performed for the recording heads 22K1, 22K2, 22K3, 22K4, 22K5, and 22K6, the CPU 100 drives a pump motor (not shown) via the input/output port 114 and the motor driving unit 116 to perform the control operation for pressuring or sucking ink.

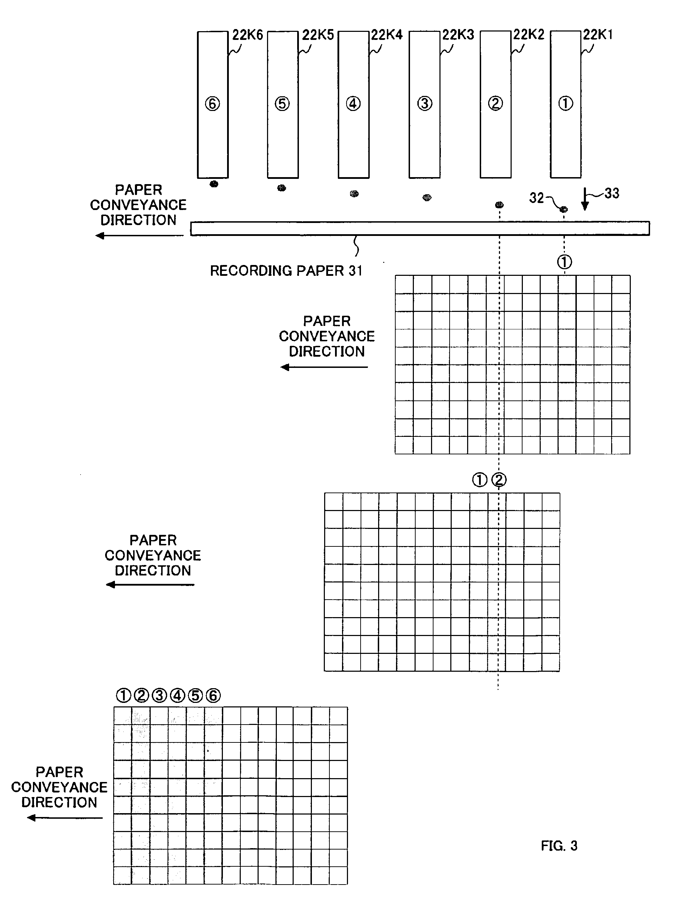

Next, the following describes the image formation method of this inkjet printer with reference to FIG. 3. This figure shows the arrangement of the six recording heads and how ink is ejected on paper from the recording heads. For convenience, the recording heads in the figure are supposed to eject ink from all nozzles corresponding to the full width of the paper (that is, a solid image is recorded).

As described above, the plural recording heads 22K1, 22K2, 22K3, 22K4, 22K5, and 22K6 are arranged perpendicularly to the paper conveyance direction and in parallel with each other. In the description below, those recording heads are called the first to sixth heads. As shown in FIG. 3, an ink droplet 32 is ejected from the first head in an ink droplet ejection direction 33, lands on recording paper 31 to form one line and, after a predetermined time has elapsed, the neighboring second line is printed by the second head. When the paper is conveyed accurately, a paper position of the second line to be printed, which follows the first line, should be right below the second head at a time the predetermined time has elapsed. The third and fourth heads also eject ink at the predetermined times in the same manner. In this way, the first to sixth recording heads print lines, one at a time, vertically to the paper conveyance direction (that is, in nozzle array direction), thus producing the print result such as the one shown at the bottom of FIG. 3.

This print method is called a raster division in which, when the first to sixth recording heads are used, the six lines are printed respectively by the six recording heads, one line at a time. This image formation method uses more recording heads to increase the print speed without increasing the ejection performance of the recording heads in the high-frequency region. This image formation method also has an advantage in that, even when some head nozzle fails, the failure is not noticeable if other heads eject ink normally.

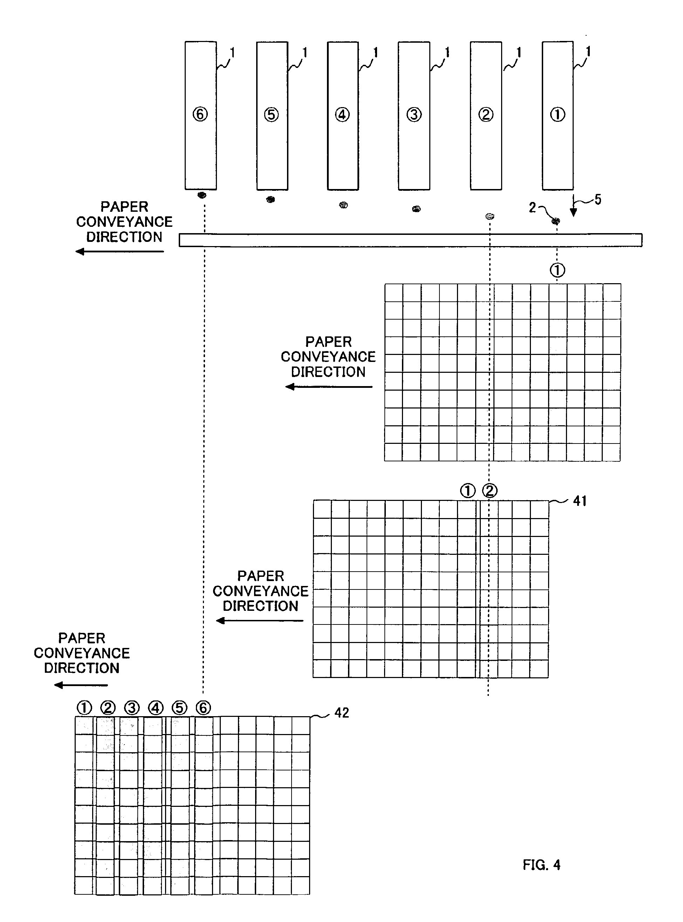

For comparison with the operation of the present invention, the following describe the conventional raster division recording. FIG. 4 is similar to FIG. 3 in that it shows the arrangement of the six recording heads and how ink is ejected on paper from the recording heads. But, FIG. 4 shows a case in which the conveyance speed of the recording paper 31 becomes slightly faster than that of the recording paper 31 in FIG. 3 for some reason.

After the first line is printed by the first head, the second line is printed when the recording paper 31 passes below the second head as in the case in FIG. 3. In this case, however, because the paper conveyance is slightly shifted forward in the conveyance direction, a droplet landing position deviation occurs in the second line as shown in a print result 41 if it is printed at the original ejection time.

If there is no means for correcting variations in the conveyance accuracy, a conveyance speed deviation is reflected on the droplet landing positions on the subsequent lines. A conveyance speed deviation, once generated, sometimes persists. In such a case, when the sixth line is printed, the deviation in the droplet landing position is accumulated as shown in a print result 42.

Because the conveyance speed deviates to the positive direction in this example, a gap is created between the successive lines. On today's printing device, the diameter of an ink droplet ejected from a nozzle is so small that even a narrow bar of a barcode is usually composed of plural lines. So, the width of a bar composed of plural lines is determined by the distance between the two outermost lines. This means that, the conveyance speed that deviates to the positive direction widens the distance between the two outermost lines and makes the bar wider than it should be. Conversely, the conveyance speed that deviates to the negative direction, though not shown, narrows the distance between the two outermost lines and makes the bar narrower than it should be.

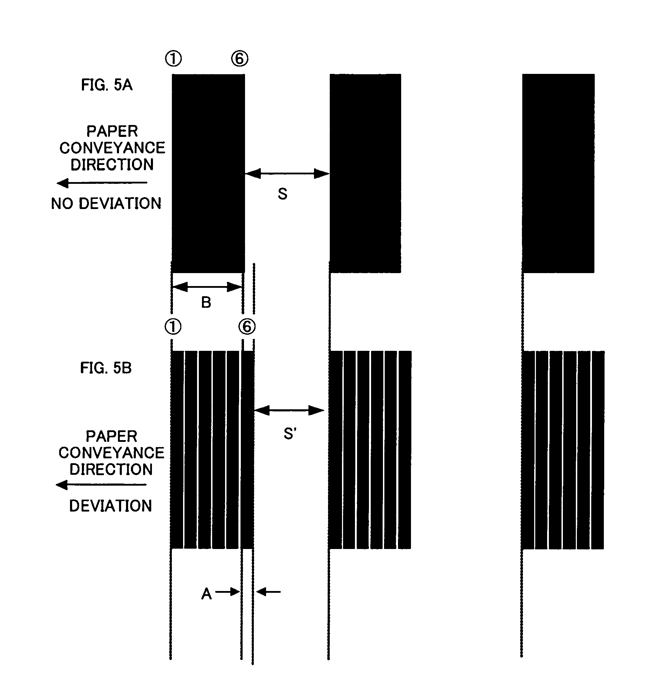

FIG. 5A is a diagram showing bars printed when there is no conveyance deviation. Because the first head to the sixth head are printed at the intended landing position accuracy, the bar width B (mm) is printed exactly as designed. Because the bar width B(mm) is printed exactly as designed, the space part has a width value of S (mm) that is the designed value. In contrast, when the paper conveyance speed deviates, the landing positions of ink ejected from the recording heads deviate as shown in FIG. 5B as described above. The bar width varies according to the deviation amount A(mm) (in the example in the figure, the bar becomes wider). In this case, the bar width becomes wider B+A(mm) and, conversely, the space width becomes narrower B-A(mm) than it should be.

To solve the problems with the conventional problems described above, the two outermost lines of a bar are recorded by the same recording head in this embodiment. The effect of this recording method will be described below using an actual example.

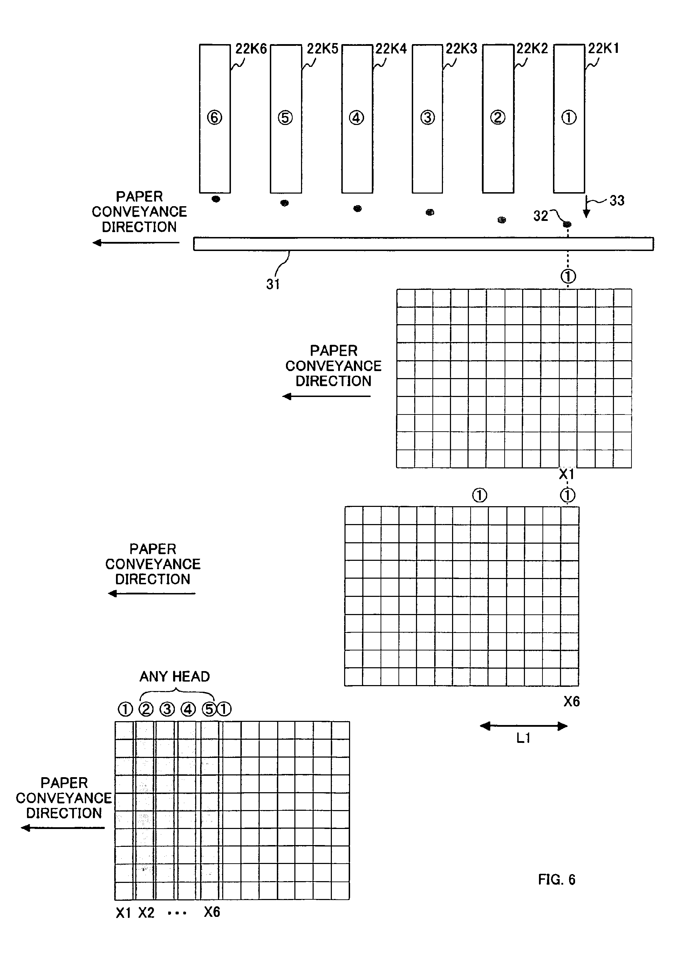

FIG. 6 is a diagram schematically showing the printing states of the heads in this embodiment. The circled numbers assigned to the heads in the figure indicate the serial numbers of the first to sixth heads.

In the example shown in FIG. 6, assume that the first head positioned in the uppermost stream in the conveyance direction is used as the "same recording head" mentioned above. Note that the same recording head is not necessarily the first head. As long as the head for recording the edges is the same head, variations in the landing position caused by variations in the conveyance speed are reduced. However, it is preferable that the first head in the uppermost upstream in the conveyance direction (the first print position) be used to print the edges because variations in the conveyance speed of the paper is lowest. Printing the outermost lines using the first head allows the edges of a bar to dry sooner than the inner part of the bar, thus minimizing the effect of blurring.

As shown in FIG. 6, the first line X1, one of the edges of the bar, is printed first by the first head and, after that, the nth line Xn(X6 corresponding to n=6 because the bar is six dots wide in this present invention), the other of the edges, is printed by the same first head. The edges at both ends of the bar are determined in this way. Although the distance between the two outermost lines of the bar is illustrated longer than it actually is for the sake of description, the distance is extremely narrow in the actual printing. When the recording paper is conveyed, the time ΔT1 elapsed from the moment the recording position of the first outermost line on the recording paper passes the point immediately below the first head to the moment the recording position of the second outermost line passes the point immediately below the same first head is calculated as L1/V where L1 is the distance between both outermost lines and V is the paper conveyance speed. This time ΔT1 is extremely shorter than the time required for recording both outermost lines respectively by the first head and the sixth head that are arranged most distant (that is, the time from the moment the recording position of the first outermost line on the recording paper passes the point immediately below the first head to the moment the recording position of the second outermost line passes the point immediately below the sixth head). Thus, even if the conveyance speed deviates from the accurate speed, the print distance between both outermost lines that are printed by the same head is much less affected by the conveyance speed deviation than the print distance between both outermost lines that are printed by the first head and the sixth head.

Note that, as compared to the interval between the heads, the distance between the successive lines of a barcode is illustrated longer than it is for the sake of description. Normally, the distance between both outermost lines of a bar is sufficiently shorter than the interval between the neighboring heads.

Although the remaining internal lines of the bar may be recorded by any recording head, including the first head, and in any order, it is desirable that the recording heads other than the one used for recording the outermost lines be used to maintain the effect of the raster division. In this example, the other recording heads (second to sixth heads) are used to sequentially print the remaining lines. The other bars of the barcode are configured in the same manner, and the barcode printing is completed.

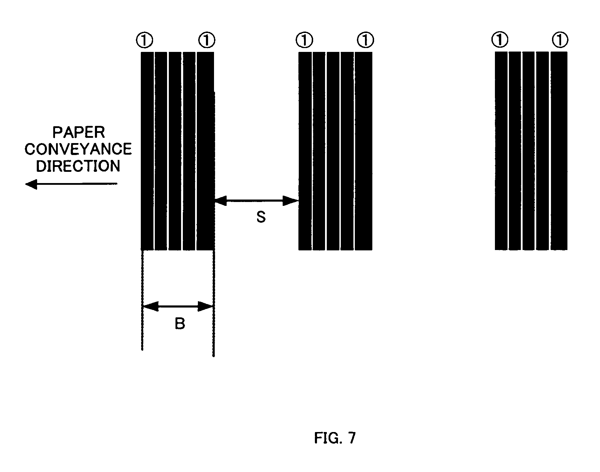

FIG. 7 is a diagram showing how bars configuring a barcode are printed in this embodiment.

Printing both edges (that is, outermost lines) of a bar using the first head eliminates the effect of a paper conveyance deviation that would be caused by the distance from the first head to the sixth head and, so, the bar can have the bar width B(mm) shown in FIG. 5A. When the bar width is B(mm), the space can also maintain the correct width S(mm). Even if a slight deviation occurs in the second head to the fifth head in the example shown in FIG. 7, the successive lines blur together when the lines are printed successively with the result that the gaps such as those shown in FIG. 7 become visually unnoticeable in most cases and no practical problems are generated. If a gap generated between lines is small and is lower than the resolution of the sensor of a barcode scanner (not shown), the gap is not identified as a gap.

Although a bar is composed of 6 dots in width in this embodiment, the same effect can be achieved by a bar composed of less than 6 dots or 7 or more dots if the edges of the bar are always printed by the same recording head.

In printing a barcode composed of the bars in the paper conveyance direction (nozzle array direction), always using the same recording head to print the edges of each bar as described above can minimize variations in the bar width caused by variations in the conveyance speed caused, for example, by paper slippage.

Another advantage is that printing the edges of a bar before printing the inside of the bar reduces the widening of the bar width, which is caused by ink blurs, as compared to a bar printed in the method of the prior art.

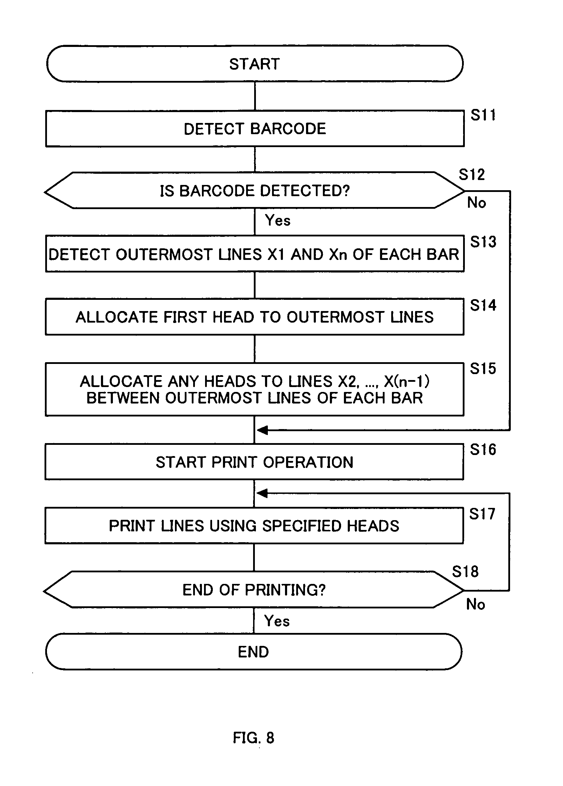

FIG. 8 is a flowchart showing the processing of the print operation in this embodiment. The program describing the execution procedure of the processing is stored in a ROM 104, and the CPU 100 interprets and executes the program for implementing the processing.

When printing is started, the CPU detects if the image to be printed includes a barcode (S11). The present invention does not limit the detection method to a particularmethod. Any detection method may be used. For example, a barcode generation software program is used to add identification information to barcode image data, the print area is checked to see if it includes a barcode, or the image data itself is analyzed to check if it includes continuous bar-like images for detecting a barcode.

The purpose of the present invention is to prevent the barcode print quality from deteriorating due to variations in the paper conveyance speed, meaning that the present invention may be limited to a barcode composed of bars perpendicular to the paper conveyance direction.

If a barcode image is detected (Yes in S12), the printing device detects the outermost lines (that is, lines adjacent to space) X1 and Xn (X1 and X6 in the bar shown in FIG. 6) of each of the plural bars (S13) and allocates data in such a way that those lines will be printed by the first head positioned in the upstream side (print start direction) of the conveyance direction (S14).

Next, to allow the lines (inner lines) X2 , ... , X(n-1) between the outermost lines of each bar to be printed by any head, the printing of each line is allocated preferably to plural heads (S15). Although the heads other than the first head are allocated to this printing in the example in FIG. 6, the first head may also be allocated. Note that, if the heads for printing the inner lines are defined by an existing raster division method, step S15 may be omitted.

After that, the print operation is started (S16). In the actual printing, the specified recording heads 22K1, 22K2, 22K3, 22K4, 22K5, and 22K6 work together to print the lines (S17). If the print end instruction is received, the printing is completed (S18); otherwise, the printing continues (S17).

Next, a second embodiment of the present invention will be described. The device configuration is the same as that of the first embodiment shown in FIG. 1 and FIG. 2, and the duplicated description is omitted. The processing procedure is substantially the same as that shown in FIG. 8, and only the different steps are described.

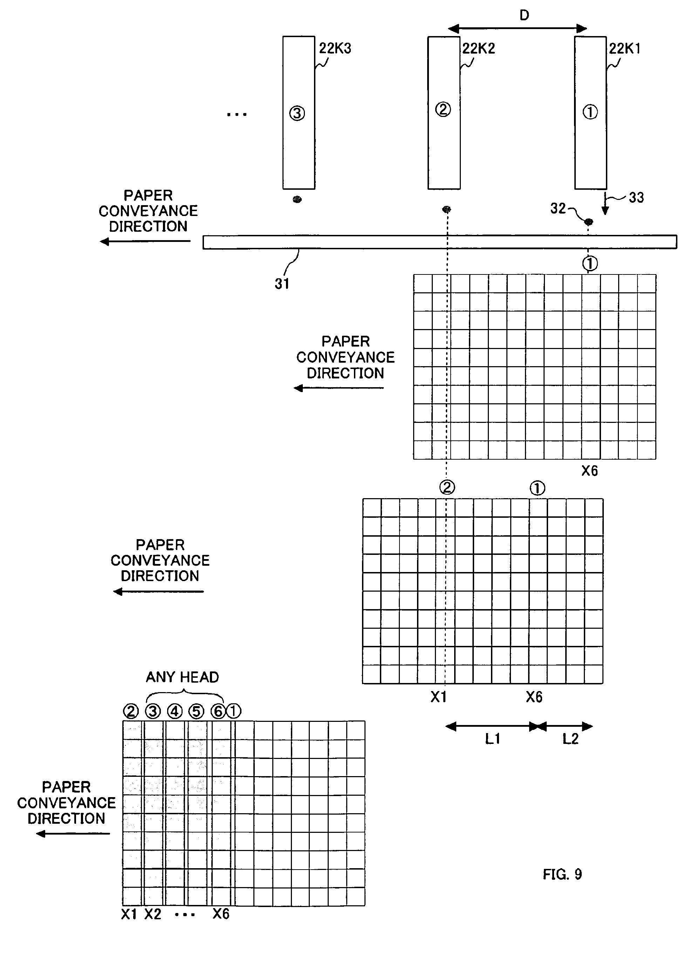

FIG. 9 is a diagram, similar to the diagram in FIG. 6, schematically showing the printing states of the heads in the second embodiment. The processing procedure is substantially the same as that shown in FIG. 8 except the content of step S14.

In the first embodiment, the two outermost lines of each bar of a barcode are printed by the same line head. In contrast, the two outermost lines are printed in the second embodiment by two different line heads, one for printing the first outermost line in the upstream side and the other for printing the second outermost line in the downstream side. In the example shown in FIG. 9, the first outermost line in the upstream side in the paper conveyance direction is printed by the first head in the uppermost stream side in the paper conveyance direction, and the outermost line in the downstream side is printed by the second head that resides downstream of the first head and is adjacent to the first head.

On a recording paper that is conveyed, the time ΔT2 elapsed from the moment the recording position of the first outermost line, the upstream-side outermost line of the two outermost lines, passes the point immediately below the first head to the moment the recording position of the second outermost line passes the point immediately below the second head is L2/V which is calculated by dividing the distance L2=D-L1 by the paper conveyance speed V where D is the distance between the first head and the second head in the paper conveyance direction and L1 is the distance between both outermost lines. Although variable according to the actual values of D and L1, the relation between L2 and L1 is typically L2>L1 (note that the actual relation is not reflected correctly in the figure for the sake of illustration).

Therefore, the time ΔT2, though longer than the time ΔT1, is still very short as in the first embodiment as compared to the time required for recording both outermost lines using the first head and the sixth head that are most distant. Thus, even if the conveyance speed deviates from the accurate speed, the print distance between both outermost lines that are printed respectively by the same head is much less affected by the conveyance speed deviation than the print distance between both outermost lines that are printed by the first head and the sixth head.

Although the inner lines, which are lines except both outermost lines, are printed by the third to sixth heads in the example described above, those lines may be printed in any order and by any heads including the first and second heads as in the first embodiment.

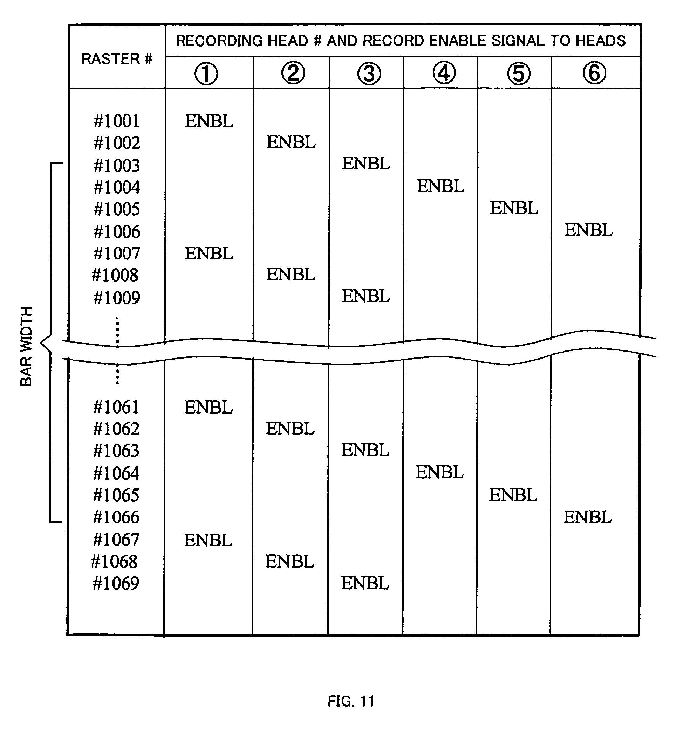

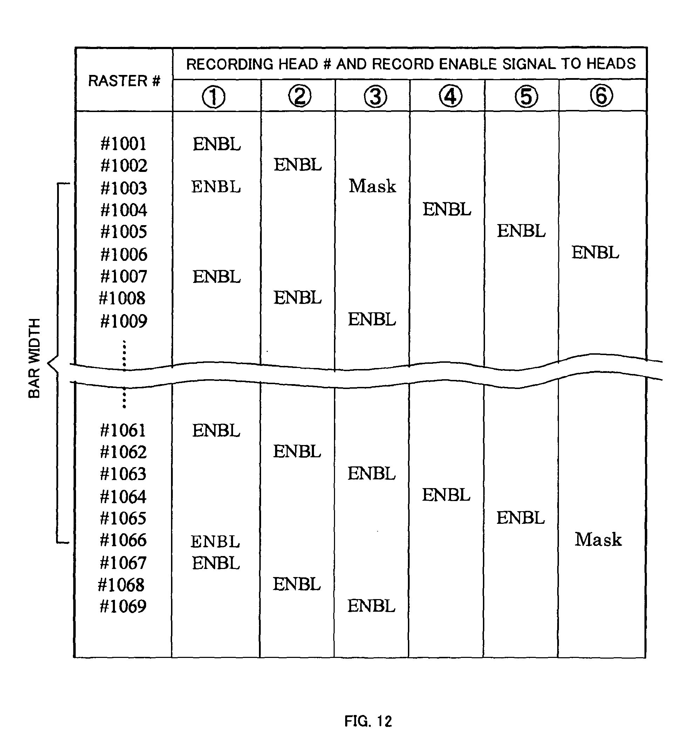

Next, referring to FIG. 11 and FIG. 12, the following describes a more practical example showing how the first to sixth heads in this embodiment are allocated to the rasters of a raster group configuring an image. FIG. 11 is a diagram showing which raster each of the first to sixth heads will print according to the conventional raster division. The ENBL (record enable) signal is allocated to a raster that is printed by a head. The example in the figure shows how the first to sixth heads are allocated to rasters #1001 to #1069, cyclically and sequentially, to record one image. It should be noted that the ENBL (record enable) signal allocated to the first to sixth heads does not last continuously in time but is issued only when a raster position corresponding to a head reaches the point right below the head while the paper is conveyed.

For example, if the recording resolution in the conveyance direction is 600dpi, then the width of one raster is 1/600[inch] When the pitch (or interval) between the heads in the conveyance direction is 1[inch], after the ENBL (record enable) signal is issued to the first recording head corresponding to raster #1001 in the figure, the ENBL(record enable) signal corresponding to raster #1002 is sent to the second recording head when the paper is conveyed by (600+1) rasters, that is, (1.0+1/600) [inch].

Now, assume a case in which one bar of a barcode, composed of bars parallel to the direction of rasters, in this image is composed of rasters #1003 to #1066, that is, the bar width corresponds to raster #1003 to #1066. In this case, the first outermost line of the bar corresponds to raster #1003, and the second outermost line corresponds to raster #1066.

In the conventional method shown in FIG. 11, the third head is allocated to the first outermost line, raster #1003, and the sixth head is allocated to the second outermost line. In the conventional method, to which head the outermost lines are allocated varies according to the number of heads or the number of rasters of a bar.

FIG. 12 is a diagram showing how the first to sixth heads are allocated to the same raster group in this embodiment. As shown in the figure, not the third head but the first head is allocated to raster #1003 that is the first outermost line. According to this allocation, the allocation of the third head is masked (mask or cancel). "Mask or cancel" means that image data on the raster is not transferred to the head. In this sense, "mask or cancel" is equivalent to the control that is performed for a head for which "ENBL" is not specified for a raster in FIG. 11 and FIG. 12. Instead of this, "mask or cancel" may be the control operation that does not transfer raster image data to the head for suppressing the printing of the image data by that head. In addition, not the sixth head but the first head is allocated also to the second outermost line. According to this allocation, the allocation of the sixth head is masked. In this way, both outermost lines of a bar are allocated always to the same head (first head) in this embodiment regardless of the number of heads or the number of rasters of a bar. Allocating both outermost lines to the same head in this way increases the accuracy of the recording position of both ends, thus reducing variations in the bar width direction.

Meanwhile, the width of the bar from the first outermost line to the second outermost line is 64 [rasters]. So, if the width of one raster based on the recording resolution in the conveyance direction is 1/600[inch], then the actual size of the bar in this example is calculated as follows.

About 2.7[mm]=25.4[mm/inch]×(64/600)

In this embodiment, it is assumed that the image data on all rasters can be sent at least to the first head. In addition, there is a possibility that the first head is responsible for successively recording the first (or second) outermost line or the neighboring raster of the first (or second) outermost line (for example, raster #1066 and raster #1067 in FIG. 12). If a control problem or an image quality problem is generated in such a case, it is also possible to reduce the print speed of at least the "neighboring rasters" or to use another head (one of second to sixth heads) to print the neighboring raster.

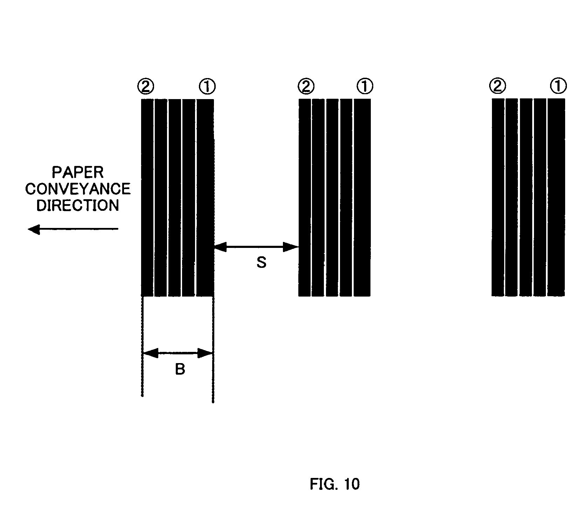

FIG. 10 is a diagram showing how the bars of a barcode in the second embodiment are printed. As shown in the figure, the first outermost line in the upstream side is printed all by the first head and the second outermost line in the downstream side is printed all by the second head. The second embodiment is applicable not only to the first and second heads but also to any neighboring two heads. However, as described above, it is desirable that the neighboring heads in the upstream side, first and second, be used to allow the most time for ink to dry in the edge of a bar.

It is possible to reverse the order of the first head and the second head in printing the outermost lines. That is, it is possible to print the second outermost line in the downstream side all by the first head, and the first outermost line in the upstream side all by the second head. In this case, though the time interval between the printing of both outermost lines becomes slightly longer than that required for printing the outermost lines in the order described above, the effect of the present invention is still significant as compared to the conventional recording method in which the distant heads, such as the first head and sixth head, are used to print the outermost lines.

While the present invention has been described with reference to the preferred embodiments, it is to be understood that various modifications and changes to the embodiments described above are possible. For example, the number of recording heads , though six in the embodiments , may be changed according to the application.

## Claims

1. A barcode printing device which comprises a plurality of line heads ejecting same-color ink and arranged in parallel with each other and in which said plurality of line heads work together to print a plurality of lines configuring each bar of a barcode while conveying recording paper relatively to said plurality of line heads, wherein
when a barcode configured by bars, each bar formed by three or more successive lines, is printed, two outermost lines of each bar are printed by one same line head of said plurality of line heads.

2. The barcode printing device according to claim 1, wherein said one same line head is one of said plurality of line heads positioned in an uppermost-stream position in a paper conveyance direction.

3. The barcode printing device according to claim 1 or 2, wherein at least one inner line between the outermost lines of each bar is printed by a line head other than said one same line head.

4. The barcode printing device according to one of claims 1-3, wherein, when a barcode is printed, positions of said plurality of line heads are fixed and the conveyed recording paper facing toward ink ejection ports of said plurality of line heads is passed therebelow.

5. The barcode printing device according to one of claims 1-4, wherein a longitudinal direction of each bar of a barcode printed is along a direction perpendicular to the paper conveyance direction.

6. The barcode printing device according to one of claims 1-5, comprising:
said plurality of line heads;
paper conveyance means that conveys recording paper;
ejection control means for controlling an ejection of ink from each line head; and
raster division means that allocates one of said plurality of line heads to each of plural lines, wherein
said raster division means allocates the same line head to the outermost lines of each bar of said barcode.

7. The barcode printing device according to one of claims 1-6, wherein
when the outermost lines are printed by said one same line head and, at the same time, said one same line head is used to print an inner neighboring line of the outermost lines, at least a print speed of the successive lines is reduced or another line head is used to print the neighboring lines.

8. A barcode printing device which comprises a plurality of line heads ejecting same-color ink and arranged in parallel with each other and in which said plurality of line heads work together to print a plurality of lines configuring each bar of a barcode while conveying recording paper relatively to said plurality of line heads, wherein
when a barcode configured by bars, each bar formed by three or more successive lines including first and second outermost lines, is printed, the first outermost line of each bar is printed by one same line head of said plurality of line heads and the second outermost line is printed by another same line head of said plurality of line heads.

9. The barcode printing device according to claim 8, wherein said one same line head and said another same line head are adjacent to each other.

10. The barcode printing device according to claim 8 or 9, wherein
the first outermost line in an upstream side in a paper conveyance direction is printed by a first line head in an uppermost-stream side in the paper conveyance direction and the outermost line in a downstream side is printed by a second line head that resides immediately downstream of said first line head.

11. The barcode printing device according to one of claims 8-10, wherein
when the first and second outermost lines of each bar are printed by said one same line head and, at the same time, said one same line head is used to print an inner neighboring line of the first and the second outermost lines, at least a print speed of the successive lines is reduced or a line head other than said one same line head is used to print the neighboring lines.

12. A barcode printing method which uses a plurality of line heads ejecting same-color ink and arranged in parallel with each other and in which said plurality of line heads work together to print a plurality of lines configuring each bar of a barcode while conveying recording paper relatively to said plurality of line heads, wherein
when a barcode configured by bars, each bar formed by three ormore successive lines, is printed, two outermost lines of each bar are printed by same one line head of said plurality of line heads.

13. A barcode printing method which uses a plurality of line heads ejecting same-color ink and arranged in parallel with each other and in which said plurality of line heads work together to print a plurality of lines configuring each bar of a barcode while conveying recording paper relatively to said plurality of line heads, wherein
when a barcode configured by bars, each bar formed by three or more successive lines including first and second outermost lines, is printed, the first outermost line of each bar is printed by one same line head of said plurality of line heads and the second outermost line is printed by another same line head of the plurality of line heads.
